# EUROPEAN PATENT APPLICATION

(11) **EP 4 687 116 A1**
(43) Date of publication of application: **04.02.2026**
(21) Application number: 24191527.1
(22) Date of filing: 29.07.2024
(51) Int. Cl.: G06V 10/80, G06V 10/82, G06V 20/58

(54) **VEHICLE, APPARATUS, COMPUTER-READABLE DATA CARRIER, COMPUTER PROGRAM, DATA, AND METHOD FOR PROCESSING SENSOR DATA**

(71) Applicant: Elektrobit Automotive GmbH, 91058 Erlangen (DE)
(72) Inventor: Chandrasekaran, Kavin, 91058 Erlangen (DE); Jancura, Pavol, 5612 AE Eindhoven (NL); Dubbelman, Gijs, 5612 AE Eindhoven (NL)
(74) Representative: Aumovio Corporation

(57) **Abstract**

Embodiments of the present disclosure relate to a vehicle, an apparatus, a computer-readable data carrier, a computer program, data, and a method for processing sensor data. The method comprises obtaining first sensor data of a first sensor of a first sensor type, obtaining second sensor data of a second sensor of a second sensor type different from the first sensor type, and fusing the first and the second sensor data. As well, the method comprises processing the fused sensor data using one or more neural networks for a computer vision task.

## Description

Embodiments of the present disclosure relate to a vehicle, an apparatus, a computer-readable data carrier, a computer program, data, and a method for processing sensor data. In particular, the present disclosure relates to a concept for using sensor data of different sensors for a vehicle.

Cameras for automotive applications offer high-resolution visual data, but face limitations in low-light conditions and adverse weather. The next-generation 4D Imaging Radar data are not only more reliable under adverse conditions, but also offer higher angular resolution with limited recognition of visual features. On the other hand, despite being expensive, lidar provide high-precision distance measurements and denser 3D point clouds. Since each sensor presents trade-offs, careful consideration in developing an effective sensor fusion algorithm for automotive applications is needed.

Some concepts propose to use cameras and lidar sensors for fusion while there has been consideration of combining camera images with thermal data as well. Some other concepts suggest fusing camera images with radar data either using point clouds, Range-Azimuth spectrum, or Range-Doppler information.

In automotive applications, such (multi-modal) sensor systems including different sensors (e.g., a camera, a radar sensor, a lidar sensor, and/or the like) may be applied for safety-critical functions, for example, for autonomous driving and/or assisted driving systems.

Establishing reliable perception is very important for any Autonomous Driving (AD) system which relies on sensors like camera, radar and lidar. To ensure reliability and mitigate errors in perception, the system requires a proper design choice which remains an ongoing and challenging research question. Several fusion strategies over the last years employ camera-lidar sensor data for 3D object detection and semantic segmentation. While some approaches use camera, radar, and lidar to perform object detection and segmentation, respectively. The main advantage of using lidar with camera data is that it provides with dense point clouds, high angular resolution, and range detection accuracy. Camera images on the other hand offers rich semantic information of scene. Despite these advantages, both camera and lidar encounter substantial performance degradation in challenging weather conditions and requires additional processing power which are crucial requirements for stable autonomous driving system over the long term.

However, autonomous driving systems may need a higher level of safety and robustness, which would not be solved with the use of traditional radar sensors due to their poor angular resolution. To address this limitation, High Definition (HD) imaging automotive radars which are less affected by adverse weather conditions due to their higher resolution compared to other radars, use dense antenna arrays to perform sensing not only in the horizontal but also in the vertical plane providing extra vertical resolution.

The integration of camera and lidar with HD radar data for both object detection and semantic segmentation using deep learning techniques is notably limited. This could be owing to the complex nature of the data and the scarcity of publicly available annotated datasets.

Hence, there may be a demand for an improved concept for using sensor data of different sensors.

This demand may be satisfied by the subject matter of the appended independent claims. The appended dependent claims disclose optional embodiments thereof.

In particular, the present disclosure suggests a (modular) fusion method and architecture to fuse camera, HD imaging radar, and lidar data by early concatenation for object detection and free-space segmentation simultaneously and separately.

Embodiments of the present disclosure provide a method for processing sensor data. The method comprises obtaining first sensor data of a first sensor of a first sensor type, obtaining second sensor data of a second sensor of a second sensor type different from the first sensor type, and fusing the first and the second sensor data. As well, the method comprises processing the fused sensor data using one or more neural networks for a computer vision task.

In other words, the method suggests that the first and the second sensor data is fused before the (fused) data is fed to the neural networks.

The proposed method and architecture (laid out later in more detail) outperforms other standalone baselines and fused combinations with similarly complex input representation in terms of performance and computational complexity. So, in connection with computer vision tasks, the proposed method may lead to better results and may require less/fewer computing resources. In automotive applications of computer vision tasks, e.g., for autonomous driving, the proposed method may provide a higher level of safety and reliability in different and/or changing circumstances (e.g., weather or light conditions).

In practice, the first and/or the second sensor may include at least one of a ranging sensor and a camera. The ranging sensor, for example, may correspond to or may comprise a lidar and/or radar sensor. The camera may be or may comprise an RGB camera.

In some embodiments, the first and the second sensor data includes raw sensor data, and fusing the first and the second sensor data comprises fusing the raw sensor data of the first and the second sensor data. The raw sensor data (which may be also understood as unprocessed sensor data) may include sensor data as it is provided by the first and the second sensor. For example, the raw sensor data include a point cloud from the lidar or radar sensor and/or one or more images from the camera.

Fusing the first and the second sensor data may comprise concatenation, multiplication, or addition of the first and the second sensor data.

The fused sensor data may include multiple dimensions including one or more dimensions for pixel data of different color channels and/or one or more dimensions for information from ranging measurements.

The method may further comprise obtaining third sensor data from a third sensor of a third sensor type different from the first and the second sensor type and fusing the third sensor data with the fused first and second sensor data. Accordingly, processing the fused sensor data may comprise processing the fused first, second, and third sensor data.

The neural networks comprise a Pre-Encoder, a Feature Pyramid Network (FPN), and/or a task-specific processing head.

Optionally, the Pre-Encoder includes 32 channels and four extraction blocks. This offers a good trade-off between performance and computational complexity.

As a skilled person having benefit from the present disclosure will appreciate, the proposed method may be applied for various computer vision tasks. In some embodiments, the computer vision task, e.g., includes free-space segmentation and/or object detection. Free-space segmentation, e.g., may be deployed for an autonomous or assisted driving system to differentiate between occupied and drivable space for a vehicle to maneuver it (safely) through a traffic environment.

Optionally, the proposed approach may be applied for multi-task learning of different computer vision tasks, e.g., object detection and free-space segmentation.

In some embodiments, e.g., in some automotive applications, the method further comprises providing a result of the computer vision task for controlling a vehicle (e.g., maneuver safely). The proposed method, e.g., is applied in an autonomous or assisted driving system where the fused sensor data may be applied for maneuvering/navigating a vehicle through a traffic environment. In such applications, the proposed method may lead to a higher level of safety and reliability.

Further embodiments of the present disclosure relate to data obtainable by an embodiment of the proposed method (for processing sensor data).

Other embodiments provide a computer program comprising instructions which, when the computer program is executed by a computer, cause the computer to carry out an embodiment of the proposed method.

As well, embodiments may provide a computer-readable data carrier having stored thereon the computer program described herein.

Further embodiments provide an apparatus comprising one or more interfaces for communication and a data processing circuit configured to execute an embodiment of the proposed method.

As mentioned above, the proposed approach may be applied in automotive applications, e.g., in a vehicle.

Accordingly, embodiments may provide a vehicle comprising an embodiment of the proposed apparatus.

Further, embodiments are now described with reference to the attached drawings. It should be noted that the embodiments illustrated by the referenced drawings show merely optional embodiments as an example and that the scope of the present disclosure is by no means limited to the embodiments presented:

### Brief description of the drawings

- Fig. 1: shows a flow chart schematically illustrating an embodiment of a method for processing sensor data;
- Fig. 2: shows an exemplary architecture for the proposed approach; and
- Fig. 3: shows a block diagram schematically illustrating an embodiment of an apparatus according to the proposed approach.

Cameras may offer high-resolution visual data, but face limitations in low light conditions and adverse weather. High Definition (HD) imaging Radar data are not only more reliable under adverse conditions, but also offer higher angular resolution with limited recognition of visual features. On the other hand, despite being expensive, lidar provide high-precision distance measurements and denser 3D point clouds. Since each sensor presents trade-offs, careful consideration in developing an effective sensor fusion algorithm for automotive applications is needed.

Embodiments of the present disclosure are based on the finding that fusing sensor data prior to feature extraction (referred to herein as "early fusion") improves the performance and reduces the computational complexity. In some embodiments, the proposed fusion architectures intake camera images and the point cloud data from HD radar and lidar sensor in perspective view for early fusion. The proposed camera-radar, camera-lidar, and camera-radar-lidar fusion models may be trained to detect vehicles and segment free drivable space simultaneously and separately.

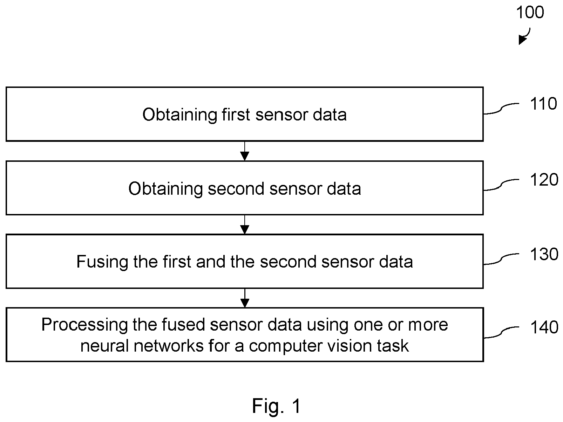

Further aspects and details are described below with reference to Fig. 1 schematically visualizing an embodiment of a method 100 for processing sensor data.

In particular, the proposed method 100 comprises obtaining sensor data from sensors of different types.

So, method 100 comprises obtaining 110 first sensor data of a first sensor of a first sensor type and obtaining 120 second sensor data of a second sensor of a second sensor type different from the first sensor type. As mentioned above, the first and the second may comprise or correspond to various sensors including, e.g., a camera, a ranging sensor (e.g., a lidar or radar sensor), and/or the like.

In practice, method 100 may be executed by a device separate from the first and the second sensor. In automotive applications (e.g., in a vehicle), the method 100 is executed by an electronic control unit (ECU) which is communicatively connected to the first and the second sensor. In such applications, the device receives the first and the second sensor data from the first and the second sensor.

Further, method 100 comprises fusing 130 the first and the second sensor data and processing 140 the fused sensor data using one or more neural networks for a computer vision task. In doing so, the first and the second sensor data may be fused as "unprocessed" as they have been obtained from the first and the second sensor. In practice, the first and the second sensor data may include or correspond to raw sensor data, as laid out in more detail later. Accordingly, fusing the first and the second sensor data may comprise fusing the raw sensor data of the first and the second sensor data.

The first and the second sensor data may be fused through different arithmetic or mathematical operations. In practice, e.g., concatenation may be applied to fuse the first and the second sensor data. That is, the first and the second sensor data is concatenated with each other. The skilled person will appreciate that, likewise, other arithmetic or mathematical operations such as addition or multiplication may be applied.

Embodiments of the present disclosure are based on the finding that such early fusion of the sensor data provides more information to the neural networks than for later fusion stages. So, the neural networks can interpret the sensor data of one sensor with respect to sensor data of another sensor and vice versa which leads to a more accurate feature extraction. At the same time, it allows a computational less complex architecture of neural networks (i.e., with less model parameters).

The skilled person will appreciate that the proposed approach may be not only applied to one, but, in general, for an arbitrary number of sensors.

Accordingly, e.g., third sensor data may be obtained from a third sensor of a third sensor type different from the first and the second sensor type the third sensor data may be fused with the fused first and second sensor data. Optionally, the first, second, and third sensor data may be fused with each other simultaneously in a single fusion step.

For such embodiments including third sensor data, processing the fused sensor data may comprise processing the fused first, second, and third sensor data.

As the skilled person will understand, the proposed approach may be implemented in a respective computer program, e.g., a computer program comprising instructions which, when the computer program is executed by a computer, cause the computer to carry out the proposed method.

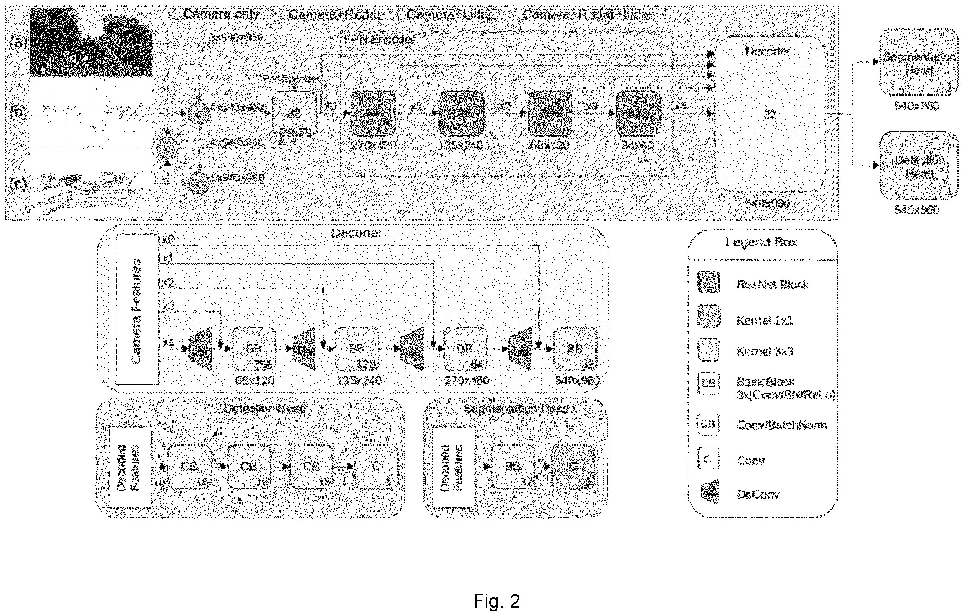

Further details and aspects of such computer program are described in more detail below with reference to Fig. 2 schematically illustrating an exemplary workflow as well as an exemplary processing architecture for the proposed approach. In particular, Fig. 2 illustrates an application of the proposed approach for multi-task learning. It should be noted that, although features and aspects may be explained only in connection with multi-task learning, they may be also applied in other applications (not related to multi-task learning).
1) Early fusion for multi-task learning:
   As exemplarily shown, the proposed approach may be not only applied for two but also more sensors. In the example of Fig. 2, the sensors include a camera, a radar sensor, and a lidar sensor which are attached to a vehicle and configured to record the environment of the vehicle. Accordingly, the architecture shown in Fig. 2 may be referred to as "camera radar lidar fusion network". So, the present example, the sensor data may include raw sensor data such as image data/images (a) from the camera as well as a point cloud (b) from the radar sensor and a point cloud (c) from the lidar sensor. As indicated in visual exemplary representations of the point clouds, they may indicate the position of objects.

The sensors may be configured such that the field of view at least partly overlaps or corresponds to each other. So, the sensor data (a), (b), and (c) at least partly include the same environment and, thus, the same objects in the environment.

The image data (a) may include multiple channels. In practice, the image data may include several channels for each color channel. In the present example, e.g., an RGB camera configured to provide image data including a channel for each color is used. The dimensions include an image of the camera and a respective color channel. So, in the present example, the image data may comprise three channeled camera images of dimension 3x540x960. The point clouds (b) and (c) may include projected points of the radar and lidar data. So, the point clouds may indicate directions of objects/obstacles reflecting lidar/radar radiation, projected into two dimensions of the field of view of the radar and lidar sensor, respectively.

According to the proposed approach, the sensor data from different sensors is fused prior to any further processing of the sensor data. In the present example, the sensor data is fused prior to a pre-encoder of the architecture. As can be seen from Fig. 2, the proposed approach may be applied for various combinations of different sensor data. So, fusing the sensor data may comprise fusing the image data with the radar-generated and/or the lidar-generated point cloud. As indicated by the encircled "c", for fusing the sensor data, sensor data may be concatenated with each other. In doing so, the number of dimensions increases. For example, when fusing the image data with one of the point clouds, the ranging information indicating the direction of objects (detected in the ranging measurements) is projected onto corresponding pixels in the image data, thereby associating information from the ranging measurements with pixel data of the image data while adding an additional dimension. So, for the three-dimensional image data and one of the point clouds (e.g., radar-generated point cloud (b)), the fused data has four dimensions. Similarly, additionally another point cloud (e.g., lidar-generated point cloud (c)) may be fused, thereby adding another dimension, so that the fused data has five dimensions (also referred to herein as "channels"). The same may be applied for other types of sensor data.

Embodiments of the present disclosure correspond to (fused) data obtainable by this method.

Fig. 2 shows the early fusion setup of camera-only, camera radar, camera-lidar and camera-radar-lidar architecture for fusing the respective sensor data. It is important to note that for early fusion; the encoder, decoder, segmentation, and detection head of the architecture remains the same for the input combinations mentioned above, except the fact that the number of channels will be 3, 4, 4, and 5 for camera only, camera-radar, camera-lidar and camera-radar lidar architecture/fusion, respectively.

As visualized, the architecture includes with a warm-up block ("Pre-Encoder"), which, e.g., applies a convolutional operation with batch normalization and a ReLU (rectified linear unit) activation to the input data which yields an initial feature map called x0. In the present example, the pre-encoder includes 32 channels and four extraction blocks.

Further, the architecture includes a Feature Pyramid Network (FPN) encoder comprising or consisting of four residual blocks that resembles like a ResNet-50 architecture and is configured to produce feature maps referred to as x1, x2, x3 and x4 at different spatial resolutions. A down-sampling of feature maps is achieved by using a stride of 2 in convolutional layers within the FPN encoder. This means at each down-sampling step the number of intermediate feature channels is doubled. Further, the architecture comprises a decoder which is configured to perform up-sampling using (four) transposed convolutions using a 2x2 kernel and a stride of 2 that halves the number of feature channels.

Appropriate skip connection concatenations and basic blocks (BB) with 3xBatchNormalizationxReLU as shown in Fig. 2 are used to reconstruct a high-resolution map from lower-resolution feature maps.

The decoded features are finally process by a task-specific processing head, here, e.g., a detection and segmentation head to perform object detection and free-space segmentation respectively. The detection head is configured to process decoded feature maps provided by decoder using three Conv-BatchNorm (CB) layers with just 16, 16, and 16 filters, respectively as shown in the orange-colored block of Fig. 2.

The last classification part of the detection head is a convolution layer that uses a 3x3 kernel with sigmoid activation, which predicts a probability map. This output corresponds to a binary classification determining whether each pixel is occupied (e.g., by a vehicle or any other (mobile) object) or not.

The segmentation comprises a single basic block (BB) including three Conv-BatchNorm-ReLu blocks configured to process the decoded feature maps, and a final 1x1 convolution produces a 2D feature map, which indicates a probability of each pixel to be drivable or not using a sigmoid activation again.

As mentioned above, the approach may be also applied for single-task learning, as laid out in more detail below.

2) Early, object and feature level fusion for single-task learning:
The skilled person will appreciate that for single-task learning, the architectures may remain the same except the fact that the segmentation head is removed while performing object detection and the detection head is removed while performing free space segmentation.

A result of the task-specific processing head, there may be provided to an application of the proposed approach, e.g., to the autonomous driving or assisted driving system (ADS) for controlling (e.g., maneuvering) a vehicle based on the result. In practice, the result, e.g., indicates objects in the environment of the vehicle (object detection) and/or free/drivable space and/or occupied space (free-space segmentation). In applications, such information can be used to plan the motion or maneuvers of the vehicle.

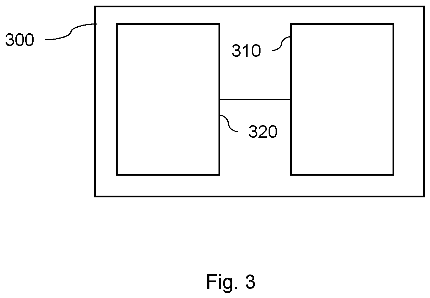

As mentioned above, the proposed approach may be also applied in an apparatus. Further details and aspects of an embodiment of such an apparatus are described below in more detail with reference to Fig. 3.

Fig. 3 shows a block diagram schematically illustrating an embodiment of such an apparatus 300. The apparatus comprises one or more interfaces 310 for communication and a data processing circuit 320 configured to execute the proposed method.

In embodiments, the one or more interfaces 310 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 320 may correspond to or comprise any type of programable hardware. So, examples of the data processing circuit 320, e.g., comprise a memory, microcontroller, field programable gate arrays, one or more central, and/or graphical processing units. To execute the proposed method, the data processing circuit 320 may be configured to access or retrieve an appropriate computer program for the execution of the proposed method from a memory of the data processing circuit 320 or a separate memory which is communicatively coupled to the data processing circuit 320.

In practice, the proposed apparatus may be installed on a vehicle. So, embodiments may also provide a vehicle comprising the proposed apparatus. In implementations, the apparatus, e.g., is part or a component of the ADS.

However, in implementations, computing resources for the vehicle may be outsourced to an external server separate from the vehicle. In such implementations, the proposed approach may be (at least partly) also implemented outside of the vehicle.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A method (100) for processing sensor data, the method (100) comprising:
obtaining (110) first sensor data ((a), (b), (c)) of a first sensor of a first sensor type;
obtaining (120) second sensor data ((a), (b), (c)) of a second sensor of a second sensor type different from the first sensor type;
fusing (130) the first and the second sensor data ((a), (b), (c)); and
processing (140) the fused sensor data using one or more neural networks for a computer vision task.

2. The method (100) of claim 1, wherein the first and/or the second sensor includes at least one of a ranging sensor and a camera.

3. The method (100) of claim 1 or 2, wherein the first and the second sensor data includes raw sensor data, and wherein fusing the first and the second sensor data comprises fusing the raw sensor data of the first and the second sensor data.

4. The method (100) of any one of the preceding claims, wherein fusing the first and the second sensor data comprises concatenation, multiplication, or addition of the first and the second sensor data.

5. The method (100) of any one of the preceding claims, wherein the fused sensor data includes multiple dimensions including one or more dimensions for pixel data of different color channels and/or one or more dimensions for information from ranging measurements.

6. The method (100) of any one of the preceding claims, wherein the method (100) further comprises:
obtaining third sensor data from a third sensor of a third sensor type different from the first and the second sensor type; and
fusing the third sensor data with the fused first and second sensor data; and
wherein processing the fused sensor data comprises processing the fused first, second, and third sensor data.

7. The method (100) of any one of the preceding claims, wherein the neural networks comprise a Pre-Encoder, a Feature Pyramid Network, FPN, and/or a task-specific processing head.

8. The method (100) of claim 7, wherein the Pre-Encoder includes 32 channels and four extraction blocks.

9. The method (100) of any one of the preceding claims, wherein the computer vision task includes free-space segmentation and/or object detection.

10. The method (100) of any one of the preceding claims, wherein the method (100) further comprises providing a result of the computer vision task for controlling a vehicle.

11. Data obtainable by a method (100) according to any one of the preceding claims.

12. A computer program comprising instructions which, when the computer program is executed by a computer, cause the computer to carry out the method (100) of any one of the claims 1 to 10.

13. A computer-readable data carrier having stored thereon the computer program of claim 12.

14. An apparatus (300) comprising:
one or more interfaces (310) for communication; and
a data processing circuit (320) configured to execute the method (100) of any one of the claims 1 to 10.

15. A vehicle comprising an apparatus (300) according to claim 14.
